# EUROPEAN PATENT APPLICATION

(11) **EP 4 730 150 A1**
(43) Date of publication of application: **22.04.2026**
(21) Application number: 24207473.0
(22) Date of filing: 18.10.2024
(51) Int. Cl.: G06F 16/3329

(54) **COMPUTER-IMPLEMENTABLE METHOD AND SYSTEM FOR DOCUMENT-BASED QUESTION ANSWERING**

(71) Applicant: Koninklijke Philips N.V., 5656 AG Eindhoven (NL)
(72) Inventor: EISENHARDT, Marc, Eindhoven (NL)
(74) Representative: Philips Intellectual Property & Standards

(57) **Abstract**

The present invention relates to a system and computer-implementable method for document-based question answering. The method comprises obtaining a document; obtaining a question of a user related to said document; invoking an AI agent to generate an answer to said question; and outputting the generated answer.

## Description

### FIELD OF THE INVENTION

The present invention relates to a computer-implementable method and to a system for document-based question answering.

### BACKGROUND OF THE INVENTION

Organizations deal with a lot of data that need to be managed and accessed well in today's world of information. Searching through many documents with traditional ways can be slow and ineffective, causing problems and mistakes. A Retrieval-Augmented Generation (RAG) chatbot can help with this. A RAG chatbot uses advanced Natural Language Processing (NLP) and machine learning methods to give correct and context-specific information from big datasets. This technology makes information retrieval easier and improves the user experience by giving exact answers fast.

These huge documents are, e.g., manuals in healthcare, e.g. manuals on how to operate a medical device, which may generally any kind of device used in healthcare (such as a medical imaging device, an examination device, a medical tool, etc.). Such manuals are often referred to as "Instructions for Use" (IFU). IFUs are very long, and it may be hard and time-consuming for a user to quickly get a useful answer to a user question, e.g., a question how to operate a certain function, how to modify certain settings, etc. The IFU is a regulatory requirement and is critical for ensuring safe and effective use of medical products. It is typically reviewed and approved by regulatory bodies such as the Food and Drug Administration (FDA) in the United States or the European Medicines Agency (EMA) in Europe before a product can be released to the market.

### SUMMARY OF THE INVENTION

It is an object of the present invention to further improve document-based question answering, particularly with respect to quality and/or speed of answering a user question.

In a first aspect of the present invention a computer-implementable method for document-based question answering is presented, the method comprising:
- obtaining a document;
- obtaining a question of a user related to said document;
- invoking an AI agent to generate an answer to said question, comprising
   instructing the AI agent how to interact with the obtained document and with one or more different interfacing functions based on the obtained question and under consideration of one or more effectiveness conditions;
   calling one or more different interfacing functions to gain context information related to the question; and
   generating an answer to the question based on the context information gained from the called one or more different interfacing functions; and
- outputting the generated answer.

In a further aspect of the present invention a system for document-based question answering is presented, the system comprising:
- a document interface configured to obtain a document;
- a question interface configured to obtain a question related to said document and to output a generated answer;
- an AI agent configured to generate an answer to said question, the AI agent being configured to
   carry out instructions how to interact with the obtained document and with one or more different interfacing functions based on the obtained question and under consideration of one or more effectiveness conditions;
   call one or more different interfacing functions to gain context information related to the question; and
   generate an answer to the question based on the context information gained from the called one or more different interfacing functions.

In yet further aspects of the present invention, there are provided a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed system, computer program and medium have similar and/or identical preferred embodiments as the claimed method, in particular as defined in the dependent claims and as disclosed herein.

An Artificial Intelligence (AI) RAG architecture is a standard technology that can answer user questions using documents. It splits a document into smaller parts, and then makes them easy for AI to search. AI picks a fixed number of parts and gives an answer. RAG Assistants are "zero shot", which means they cannot retry if they miss the information.
RAG agents repeatedly query their AI database (usually a Vector Database) until they find the information they need. It has been found that this solves some retrieval problems, but does not address one of RAG's major issues, which is the lack of context.

The method and system disclosed herein outperform RAG Assistants and RAG Agents, particularly in terms of context awareness, which is crucial for ensuring high-quality answers. The key advantage lies in the simplicity and ability to utilize a document, such as a PDF file, by viewing e.g. entire rendered pages rather than isolated images from a vector database. This comprehensive perspective allows the AI to understand the relationships between various elements on a page, such as tables, text, and images, which RAGs struggle with as they only see isolated images and make assumptions about context.

By employing AI-friendly interfaces for real-time document processing, the disclosed method and system can accurately interpret how different components of a document interconnect. For instance, it can recognize that an image near a table is related to the table, an insight that general RAGs typically lack. This holistic approach directly impacts the quality of the answers generated, as the AI agent can correct its mistakes and employ new search strategies to find the correct information. Compared to RAG, it has more options to search than just vector and string searches. Consequently, the context-aware processing leads to more accurate and reliable answers, enhancing the overall effectiveness of the AI agent.

Another advantage of embodiments of the present invention is the ability to close the feedback loop simply and efficiently. After answering user questions and logging its search outcomes, the AI agent may optimize its contextual understanding of documents using natural text, e.g. mimicking a human taking notes. Consequently, it does not need to repeatedly search for the table of contents or specific chapters, as it already knows where key elements are located. This process is especially useful because the AI agent stores its insights in natural language, making its "thinking" transparent and easily understandable for humans. This mimics a human taking notes on where to find certain information. By continuously refining its context information, the AI agent becomes more efficient and accurate over time, enhancing the user experience and bridging the gap between AI operations and human comprehension.

The present invention thus further improves a chatbot, which uses RAG in its core, by using AI to respond to users' queries based on the information that is stored e.g. in files. An AI Proof of Contact (PoC) agent may thus be provided, which effectively navigates files, e.g. PDF files, to answer questions of a user. This AI agent is a running PoC and also proved to work in other use cases very well.

One of the steps of the proposed method is to invoke an AI agent to generate an answer to the user's question, which comprises to instruct the AI agent how to interact with the obtained document and with one or more different interfacing functions based on the obtained question and under consideration of one or more effectiveness conditions. In a preferred embodiment, instructing the AI agent includes generating a system prompt based on the obtained question and under consideration of one or more effectiveness conditions and/or one or more of the interfacing functions, and providing the system prompt to the AI agent. The system prompt may be written text that explains in natural text to the AI agent what to do and which interfacing functions will be available during runtime.

Depending on the question, different interfacing functions may be selected to be used. It is not mandatory to use the same interfacing functions all the time, but specific interfacing functions may be selected and used, e.g. from a big database of functions.

Furthermore, there may be different usage (gradual) of the interfacing functions at different times. The full functionality of the interfacing functions is not always utilized. Depending on the information generated from previous usages, when the same interfacing function is used at a different moment, it may be used to perform more advanced or less advanced operations. For instance, the level of the navigation, review and search may not always be the same but may be dynamic.

The answer may be generated using a large language model (LLM) and the generated system prompt.

In an embodiment, the AI agent is instructed by use of one or more of:
- one or more directives, rules, and/or constraints to guide the AI agent's responses, e.g. to ask the AI agent always for structured output (JSON) or to plan a strategy while going along (Chain of Thought);
- goals and objectives directing the AI agent towards achieving desired outcomes, e.g. to supply the best possible answer at the end (no more funds) of every run or to always use the functions to navigate files;
- an expected format for user inputs and/or structure for the AI agent's responses, in particular regarding length, structure, and/or tone, e.g. JSON output;
- contextual knowledge and/or background information, e.g. to explain the AI agent already where to find a table of contents, or to explain that "measurements" in healthcare are not the same as what an average person thinks is a measurement;
- behavior and/or personality traits of the AI agent, e.g. to always be solution orientated and critical;
- adaptability defining how the AI agent may adjust to user interactions, e.g. prompting how a question shall be "processed", by e.g. giving an average human a simpler answer than a specialist who asks a very specific question;
- ethical and/or safety considerations, e.g. forbid the AI agent to answer questions about how to treat a patient or just answer questions on how to use the device; and
- instructions and/or strategies for navigating documents, making function calls, and/or looping its processes, e.g. function calling that defines the format of the structured output the AI agent should generate to make function calls or explaining what may happen when the AI agent calls the function (the AI agent can expect that it can read the output, too).

Another step of the proposed method is to call one or more different interfacing functions to gain context information related to the question. In an embodiment the one or more different interfacing functions include one or more of
- a navigation function, in particular a ReadSummary function, configured to navigate a generated or obtained summary to identify relevant pages, sections, and/or subsections of the document;
- a review function, in particular a visual review function (e.g. a BeMyEyes function), configured to review pages, sections, and/or subsections of the document;
- a search string function, in particular a StringSearch function, configured to search within images, pages, sections, and/or subsections of the document and/or within audio files; and
- a summary function configured to generate a summary and/or navigation content for the document, in particular in the form of text including keywords.

The summary function may be specifically designed for navigating documents efficiently and should not be used to summarize or compress information for question answering purposes, as this could lead false information.

In certain implementations, the review function may be instructed to review relevant pages, sections, and/or subsections of the document identified as relevant by the navigation function. The search function may be instructed to search a string within pages, sections, and/or subsections of the document identified as relevant by the navigation function or by the review function. The summary function may be instructed to summarize one or more pages, sections, and/or subsections of the document.

In another embodiment, one or more of the navigation function, the review function, the search function and the summary function are allowed to make use of the output of one or more of the respective other functions. For instance, the navigation function may be allowed to also use review, summary or search function outputs.

According to another embodiment, the AI agent is repeatedly invoked, and the result of an iteration is used for invoking the AI agent in the subsequent iteration. This further improves the quality of the generated answer.

The proposed method may initially obtain not only the document used for generating the answer, but also a summary of the document. The summary may, e.g. comprise a summary per one or more pages or per section or per subsection, in particular in the form of text including keywords.

The summary may be generated in advance and may be made available to the proposed method together with the document. In another embodiment, the method may further comprise the initial step of preprocessing the document to generate the summary of said document. This has the advantage that the summary may be generated in a desired way with a desired volume and content.

The summary may be used to navigate the document. By reading the summary, the AI agent is easier and quicker aware of where to find certain information in the document without the need to read whole pages. This may be a huge factor be cheaper than reading pages which may making the generation of the answer more efficient.

In another embodiment, the one or more effectiveness conditions include one or more limits regarding costs and/or time and/or the number of times a certain document, summary or page thereof has been accessed or opened; and/or the one or more effectiveness conditions may be defined by the user or may be preset for use by the AI agent.

The disclosed system for document-based question answering generally comprises a document interface configured to obtain a document and a summary of said document, a question interface configured to obtain a question of a user related to said document and to output a generated answer, and an AI agent configured to generate an answer to said question.

The system may be implemented in hard- and/or software, e.g. in the form of a processor, computer or other processing unit that is able to carry out the functions of the system. The system may e.g. be implemented on a user device that the user is going to use and in respect of which the user may have questions, e.g. how to operate a certain function, change a setting, resolve an error, etc. The disclosed system and method may particularly be used in the medical domain, and in an exemplary embodiment the system may be implemented in a user device, in particular a medical system or device, a patient monitor, a medical imaging device, or a clinical decision support system.

The document interface may be realized in any useful way that is able to provide a document and its summary to the system. For instance, the document interface may be implemented as wireless or wired interface that can access a database or that can receive a document e.g. in electronic form (e.g. as PDF file or electronic file in any other format).

The question interface may be realized in any useful way that is able to enable a user or another AI agent or another AI tool to provide a question. For instance, the question interface may be implemented as user interface allowing a user to enter the question(s) in spoken language, text form or any other form that can be processed by the user interface. The user interface may, e.g. comprise a keypad, a touchscreen, a microphone. Preferably, the question interface is further configured to output the generated answer, e.g. in in one or more of spoken language, text form, image data, time series data, or in any other form that the user (or another AI agent) can understand. In an embodiment, a user interface may be used for obtaining the question and outputting the answer. In another embodiment, an electronic interface for communicating with another AI agent or AI tool may be used.

The AI agent may generally be configured in hard- and/or software, e.g. in the form of a programmed processor or computer. Generally, an AI agent is a software program that can interact with its environment, collect data, and use the data to perform self-determined tasks to meet predetermined goals. Goals (e.g. questions) can be set by the user and the AI agent independently chooses the best actions it needs to perform to achieve those goals (e.g. answer the questions). Generally, the AI agent may be implemented as software running anywhere, such as raspberry pi, medical device, smartphone, computer, tablet, cloud, etc. Good performance can be achieved through access to cloud services.

### BRIEF DESCRIPTION OF THE DRAWINGS

These and other aspects of the invention will be apparent from and elucidated with reference to the embodiment(s) described hereinafter. In the following drawings.
Fig. 1 shows a schematic diagram of an embodiment of a system according to the present invention.
Fig. 2 shows a flowchart of an embodiment of a method according to the present invention.
Fig. 3 shows a schematic diagram of another embodiment of a system according to the present invention.
Fig. 4 shows a flowchart of another embodiment of a method according to the present invention.

### DETAILED DESCRIPTION OF EMBODIMENTS

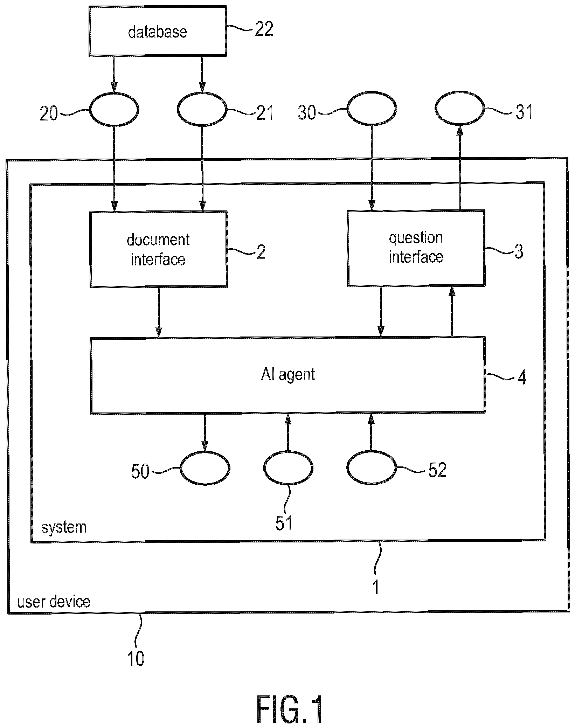

Fig. 1 shows a schematic diagram of an embodiment of a system 1 for document-based question answering according to the present invention. The system 1 may be part of a user device 10, such as a medical device (e.g. patient monitor, a medical imaging device, or a clinical decision support system). The system 1 is provided in order to answer questions that a user of the user device (e.g. a nurse or physician as user of a medical device) in a fast and qualified manner so that the user may not need to search through the user manual or IFU of the user device to find an answer to the question.

The system 1 comprises a document interface 2 configured to obtain a document 20 and, optionally, a summary 21 of said document, a question interface 3 configured to obtain a question 30 (preferably a question of a user, but optionally from another AI agent) related to said document and to output a generated answer 31, and an AI agent 4 (e.g. a programmed processor) configured to generate an answer 31 to said question 30.

The document interface 2 may be configured to access a database 22, e.g. of the manufacturer or supplier of the user device 10, to obtain (retrieve or receive) a document 20 and, preferably, its summary 21. The document 20 may e.g. be the user manual or IFU of the user device 10, e.g. as PDF file, and the summary 21 may comprise a text summary of each page of the document 20, e.g. as PDF file. In an embodiment, at first use of the user device 10 the document 20 and its summary 21 may be obtained (e.g. downloaded) to the system 1, or they may be obtained upon a user instruction to do so. In another embodiment, the document 20 and its summary 21 may be supplied along with the user device 10 including the system 1 so that they are ready to use. In another embodiment, only the document 20 may obtained and the summary 21 may be generated by the system 1.

The question interface 3 may be configured as user interface and may comprise one or more of a keypad, microphone and touchscreen so that the user can enter a question 30 in desired form, preferably in a fast and simple manner. The question interface 3 may further be configured to output the generated answer 31 (e.g. through a user interface to the user, or in electronic form to another AI agent) or even to interact with the user during the generation of the answer, e.g. to reformulate the answer and/or answer questions that the AI may pose to the user to further improve its generation of the answer to the original question. For this purpose that user interface may further comprise a screen and/or loudspeaker.

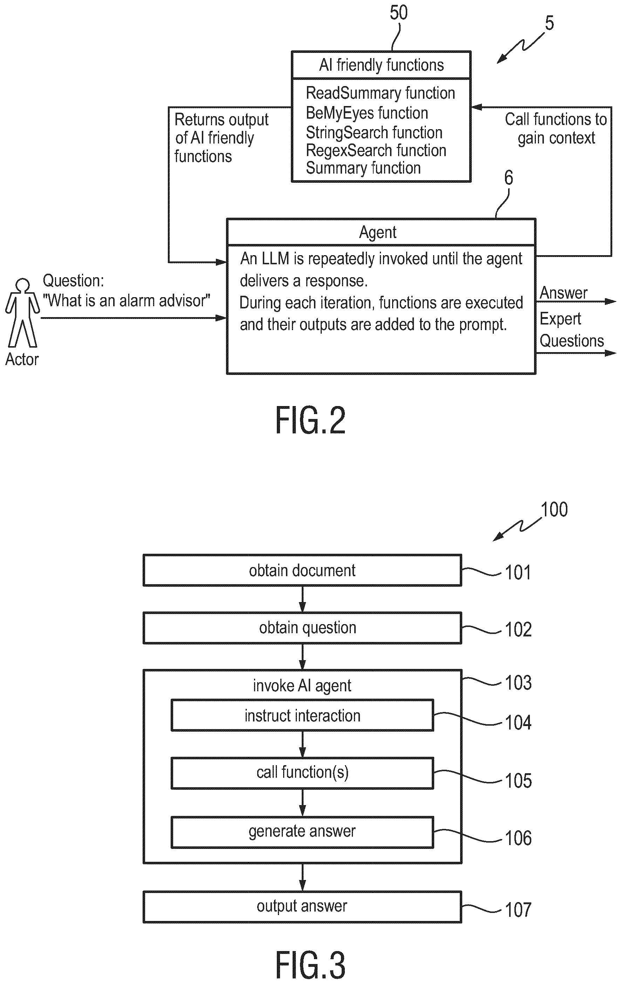

The AI agent 4 may be implemented as programmed processor or computer that is configured to process the question and generate the answer. The AI agent 4 is configured to carry out essential steps of a method 100 for document-based question answering. Fig. 2 shows a flowchart of an embodiment of a method 100 for document-based question answering according to the present invention.

The method 100 comprises a step 101 of obtaining a document (and optionally a summary of said document) and a step 102 of obtaining a question of a user related to said document. The subsequent step 103 of invoking an AI agent to generate an answer to said question is carried out by the AI agent 4 and comprising a number of sub-steps.

In a first sub-step 104, the AI agent 4 is instructed how to interact with the obtained document 20 and with one or more different interfacing functions 50 based on the obtained question 30 and under consideration of one or more effectiveness conditions 51. Interfacing functions may be part of the software, e.g. the AI agent, and/or may be taken from function marketplace database or other source.

In this context, instructing the AI agent 4 how to interact with the obtained document may include to explain the AI agent 4 that it can output a specific format to make function calls. This is generally known as prompt engineering in AI. When certain control over programs and/or functions is given to the AI agent, then these functions may be explained to that AI agent 4 in natural language. In embodiments of the present invention, the AI agent 4 may be configured to read and/or use vision and/or read the summary 21. The summary may be used to navigate the document. By reading the summary, the AI agent knows where to find which information in the document.

The effectiveness conditions may include limits regarding costs and/or time and/or the number of times a certain document, summary or page thereof has been accessed or opened. One or more effectiveness conditions may be defined by the user or may be preset for use by the AI agent 4. For example, a certain amount of money may be an effectiveness condition regarding costs, which indicates to the AI agent 4 how much money it may spent for the generation of the answer. While running, the money that is still available and/or that has been used already may be presented to the AI agent 4.

In a second sub-step 105, one or more different interfacing functions 50 are called to gain context information 52 related to the question 30. The context information, which may also be referred to as "insights" or "insight information", is the information that is found in the document by the different interfacing functions. By use of the interfacing function(s) the AI agent 4 may particularly learn about the document, its structure, the nature of information, in particular by over and over opening documents (e.g. pages of the summary and the document) and looking on them with different functions to gain knowledge (insights).

In a third sub-step 106, an answer 31 to the question 30 is generated based on the context information 51 gained from the called one or more different interfacing functions 50. Thus, once the AI agent 4 has collected all the different information in sub-step 106, it can generate an answer, e.g. using a LLM and a specially designed prompt. This step may be implemented in the same manner as in RAG, where information is obtained in a different strategy. The original question(s) and the partial document(s) / summary may be provided to a LLM to generate a natural answer.

Finally, in step 107 the answer 31 generated by the AI agent is outputted by the question interface 3, e.g. by a user interface in text form and/or spoken form.

Thus, the present invention makes use of a system prompt and interfacing functions. Furthermore, aspects of the present invention relate to the choice of interfacing functions and how the AI agent is made to use these functions to accomplish its goals. The present invention addresses the need for a more efficient and contextual AI interaction experience.

Embodiments of the present invention comprise the components AI system prompt and interfacing functions. Together, these components may define the AI agent's interaction framework. It includes an introduction that outlines the AI agent's role and purpose, setting the stage for its operations. Instructions provide clear directives, including specific rules and constraints to guide the AI agent's responses. Goals and objectives direct the AI agent towards achieving desired outcomes, ensuring it remains goal oriented. The system prompt describes the expected format for user inputs and the ideal structure for the AI agent's responses, including length, structure, and tone. Contextual knowledge supplies necessary background information to ensure the AI agent's responses are informed and relevant. The behavior and personality traits of the AI agent are defined to ensure consistent and engaging interactions. Adaptability specifies how the AI agent should adjust to user interactions, enhancing its responsiveness and user satisfaction. Ethical and safety considerations highlight guidelines to prevent harmful content and ensure ethical interactions. This structured prompt ensures that the AI agent operates effectively, delivering useful, accurate, and appropriate responses.

The interfacing functions are crucial for the AI agent to interact with documents and other agents. These functions enable the AI agent to retrieve specific information from or about the document, navigate through the document efficiently to locate relevant sections, and communicate with other AI agents to gather additional information or support. These interfacing functions significantly enhance the AI agent's capabilities, making it more versatile and effective. They are special, because they are optimized for AI usage, e.g. to reduce token size.

The present invention can be practiced with a well-defined AI system prompt that includes many or all the components mentioned above and a set of interfacing functions that allow the AI agent to retrieve information, navigate documents, and request assistance.

A framework is thus presented for AI interactions with a structured prompt and interfacing functions. It can be integrated into existing AI platforms, devices, or products, or developed as a new product. It can also be used to improve AI assistants using AI agents, because AI assistants are cheap and fast, and AI agents can provide additional information or support.

In an embodiment, a preprocessing of the document 30 is performed initially in order to generate the summary 31. For instance, one or more file(s) may be preprocessed. A good and efficient way of preprocessing use a PDF file (of the document 30) rendered as multiple PNG files of pages to a visual AI like GPT4o to generate keywords/terms for each page, said collection of pages with generated keywords/terms then representing the summary 31 of the document 30.

In an exemplary implementation, the summary may be generated as follows: Use generated AI (GenAI) by providing the previous X pages, the current page, and a specific prompt. The previous pages provide the AI with context about the current chapter and highlight special aspects. The current page is summarized in a navigation-optimized format, starting with a general topic and then adding detailed points. The prompt is a specific instruction that asks the AI to generate the summary in the required navigation format.

An exemplary summary output (e.g. structured in JSON format) may look as follows:
Page-20: Alarming: Change limits for SpO2, Alarming: Warning,
Page-21:
   Summary characteristics may be that the summary only comprises statements or titles, not full sentences and/or that it is intended solely for navigation, not for gaining information.

The interfacing functions can be implemented in many ways and may be chosen from different options:
A first interfacing function may be a reading function, such as ReadSummary(filename, page number), which gets the keywords/terms (i.e. the summary) created in the preprocessing. The AI agent will mostly use this function to "quickly navigate" without using many tokens.

A second interfacing function may be a visual review function, such as BeMyEyes(filename, page number, llm_prompt), which lets the AI agent ask a Vision AI (like GPT4o) to get specific information on a page. The AI agent writes the vision query itself, which lets it compress information in very few tokens.

A third interfacing function may be a search function, such as String Search(filename, string), which lets the AI agent quickly search where certain terms appear within file, e.g. a PDF file. The search may also be made in images or audio files. The AI agent often utilizes this function to e.g. find headings/chapters that have been mentioned in some document. In another embodiment, the search function may go beyond simple text checks, but may also include pattern recognition like regex (as currently described at https://help.relativity.com/RelativityOne/Content/Relativity/Regular_expressions/Searching_with_regular _expressions.htm).

A fourth interfacing function may be a summary function configured to generate a summary and/or navigation content for the document. The summary function may be specifically designed for navigating documents efficiently and should not be used to summarize or compress information for question answering purposes, as this could lead false information

In an embodiment, the system prompt instructs the AI agent on how to interact with the document and utilize the previously described interfacing functions. It serves as the initial guide for the AI agent, explaining what it is, why it is needed, and how it should operate to achieve its goals. The prompt outlines the AI agent's role and purpose, providing detailed instructions and strategies for navigating documents, making function calls, and looping its processes until it gathers enough information to provide an accurate answer. By embedding the prompt with specific rules, goals, and contextual knowledge, it ensures that the AI agent can operate efficiently and adaptively, iteratively refining its search strategy and function calls based on intermediate results. This structured approach not only enhances the AI agent's ability to retrieve relevant information but also ensures it remains within cost limits and maintains a clear and consistent interaction flow.

A system response (loop) may contain one or more of the following items (preferably all of them):
Context information: The AI agent explains its current strategy in natural language.
Function calls: The AI agent requests to execute certain functions based on its strategy.
Final answer: The AI agent provides an answer to the user question.
In addition, the system prompt may ask for a specific JSON format to be outputted.

Fig. 3 shows a schematic diagram of another embodiment of a system 5 according to the present invention. This embodiment may use a ChatCompletion backend (like the one from OpenAI) to start the conversation with the system prompt mentioned before. The Assistant will then receive the user's actual question (in this example "What is an alarm advisor") and a list of the document names that are available. This request is then passed to a Foundation Model 6 (the AI agent) to generate a response. Next, the following steps are repeated. The response will most likely always include context information and function calls. All of the function calls 5 may be requested by the AI agent 6 in parallel. The result of the function call is formatted in text and added to the ChatCompletion conversation. When all functions the AI agent 6 asked for have been executed successfully and all of their return values have been added, the conversation may again be sent to the Foundation Model 6. This is repeated until the AI Agent gives an answer or runs out of money.

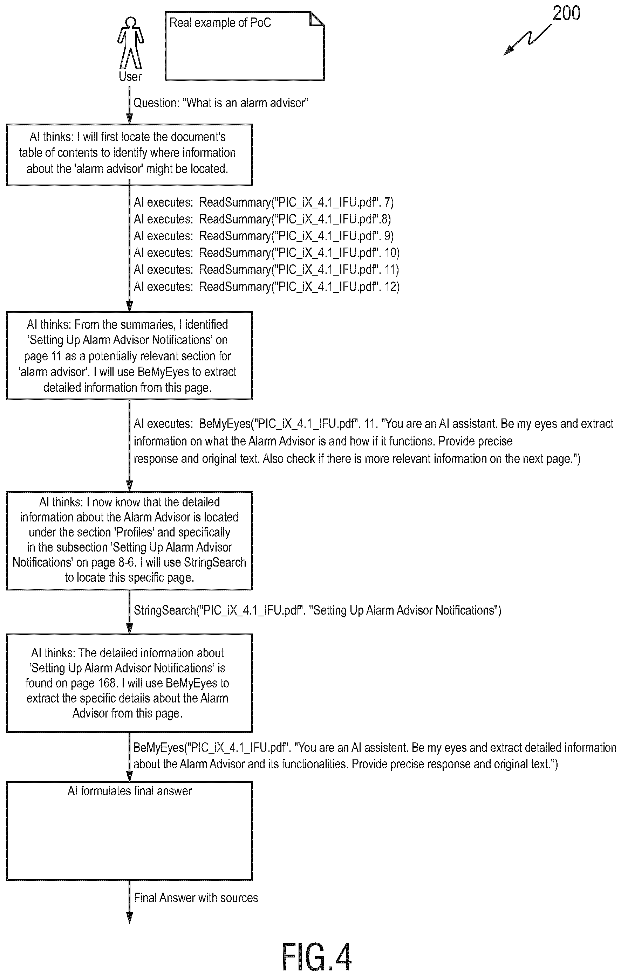

Fig. 4 shows a flowchart of another embodiment of a method 200 according to the present invention. It is particularly shown how the AI agent responds to the question "What is an alarm advisor?". The AI agent gradually invokes functions until it gets enough context. The text that says "AI thinks" is also produced by the AI agent. It not only informs the user what it is doing, but also uses this information as a step in between making function calls to improve performance.

According to another embodiment, a reverseLeaming feedback loop may be used. The AI agents write what they are doing and why they are doing this into a log file that humans can read and understand. This log file helps anyone to see how the AI agents searched for and interpreted the contents they retrieved. By giving the log file to another GenAI assistant, it can be analyzed for patterns and the GenAI assistant can be asked to improve the system prompt or context information given to the AI agent, so that the agent can e.g. find certain information faster.

As an example, there is a context file for every document. It is empty by default. When the AI agent begins to browse the PDF file, it takes 3-4 attempts to locate the table of contents, because the table of contents starts on page 12 instead of on page 2. Then, it takes another two attempts to identify the end of the table of contents as well. After the GenAI assistant sees this in the log file, it updates the context file with the information that the table of contents is on page 12 and ends on page 15. Moreover, it might also add some more detailed information about the specific contents of these pages, so that next time, the AI agent knows right away what page to open first.

The method and system according to the present invention can be applied in many different scenarios. The AI agent designed to navigate and interpret PDF documents has broad applications across various fields, both technical and commercial. Its ability to efficiently retrieve and contextualize information from complex documents makes it particularly valuable in the following areas:
Healthcare and medical devices: The AI agent can significantly enhance the usability of Instruction for Use (IFU) manuals for medical devices, ensuring that healthcare professionals and patients can quickly access critical information. This aligns with ongoing initiatives to improve medical device usability and compliance with regulatory requirements. Additionally, by integrating this AI agent, Clinical Decision Support Systems (CDSS) offerings can be improved, enabling real-time, context-aware information retrieval from extensive medical literature and guidelines.

Technical documentation: The AI agent can streamline the process of accessing technical specifications, maintenance procedures, and troubleshooting guides, which is particularly relevant for a range of complex electronic and mechanical products. This AI agent can facilitate literature reviews and patent searches by efficiently navigating through large volumes of technical documents.

Customer support and service: Integrating this AI agent into customer support systems can enhance the ability of chatbots to provide accurate and contextually relevant responses, thereby improving customer satisfaction and reducing response times. This can be applied to various consumer products, from home appliances to personal health devices.

Regulatory and compliance: The AI agent can assist in ensuring that all necessary regulatory documentation is up-to-date and easily accessible. This is particularly useful for compliance teams who manage extensive regulatory requirements for medical devices and other regulated products.

Educational tools: The AI agent can be integrated into e-learning systems to provide students and professionals with quick access to information from textbooks, research papers, and other educational materials. This can enhance educational initiatives and training programs for healthcare professionals.

Corporate knowledge management: By deploying the AI agent within corporate knowledge management systems, employees can more efficiently access policies, guidelines, and other internal documents, fostering a more informed and productive workforce.

By leveraging this AI agent, product usability can be enhanced, customer support can be improved, regulatory compliance can be streamlined, and innovation across various business units can be fostered. The AI agent's capabilities align with the commitment to advancing technology and improving people's lives through meaningful innovation.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

A computer program may be stored/distributed on a suitable non-transitory medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. Computer-implementable method for document-based question answering, the method comprising:
- obtaining a document (20);
- obtaining a question (30) related to said document;
- invoking an AI agent (4, 6) to generate an answer (31) to said question, comprising
instructing the AI agent how to interact with the obtained document and with one or more different interfacing functions (50) based on the obtained question and under consideration of one or more effectiveness conditions (51);
calling one or more different interfacing functions to gain context information (52) related to the question; and
generating an answer (31) to the question (30) based on the context information (52) gained from the called one or more different interfacing functions (50); and
- outputting the generated answer (31).

2. Method according to claim 1,
wherein instructing the AI agent includes
- generating a system prompt based on the obtained question and under consideration of one or more effectiveness conditions and/or one or more of the interfacing functions; and
- providing the system prompt to the AI agent (4, 6).

3. Method according to claim 2,
wherein the answer (31) is generated using a large language model and the generated system prompt.

4. Method according to any one of the preceding claims,
wherein the AI agent (4, 6) is instructed by use of one or more of:
- one or more directives, rules, and/or constraints to guide the AI agent's responses;
- goals and objectives directing the AI agent towards achieving desired outcomes;
- an expected format for user inputs and/or structure for the AI agent's responses, in particular regarding length, structure, and/or tone;
- contextual knowledge and/or background information;
behavior and/or personality traits of the AI agent;
- adaptability defining how the AI agent may adjust to user interactions;
- ethical and/or safety considerations; and
- instructions and/or strategies for navigating documents, making function calls, and/or looping its processes.

5. Method according to any one of the preceding claims,
wherein the one or more different interfacing functions (50) include one or more of
- a navigation function, in particular a ReadSummary function, configured to navigate an obtained or generated summary to identify relevant pages, sections, and/or subsections of the document;
- a review function, in particular a visual review function, configured to review pages, sections, and/or subsections of the document;
- a search function, in particular a StringSearch function, configured to search within images, pages, sections, and/or subsections of the document and/or within audio files; and
- a summary function configured to generate a summary and/or navigation content for the document, in particular in the form of text including keywords.

6. Method according to claim 5,
wherein the review function is instructed to review relevant pages, sections, and/or subsections of the document identified as relevant by the navigation function; and/or
wherein the search function is instructed to search a string within pages, sections, and/or subsections of the document identified as relevant by the navigation function or by the review function; and/or
wherein the summary function is instructed to summarize one or more pages, sections, and/or subsections of the document.

7. Method according to claim 5 or 6,
wherein one or more of the navigation function, the review function, the search function and the summary function are allowed to make use of the output of one or more of the respective other functions.

8. Method according to any one of the preceding claims,
wherein the AI agent (4, 6) is repeatedly invoked, and the result of an iteration is used for invoking the AI agent in the subsequent iteration.

9. Method according to any one of the preceding claims,
further comprising the initial step of obtaining or preprocessing the document (20) to generate a summary (21) of said document.

10. Method according to claim 9,
wherein the summary (21) of the document (20) comprises a summary per one or more pages or per section or per subsection, in particular in the form of text including keywords.

11. Method according to any one of the preceding claims,
wherein the one or more effectiveness conditions (51) include one or more limits regarding costs and/or time and/or the number of times a certain document, summary or page thereof has been accessed or opened; and/or
wherein the one or more effectiveness conditions (51) may be defined by the user or may be preset for use by the AI agent.

12. System (1, 5) for document-based question answering, the system comprising:
- a document interface (2) configured to obtain a document (20);
- a question interface (3) configured to obtain a question (30) related to said document and to output a generated answer (31);
- an AI agent (4, 6) configured to generate an answer to said question, the AI agent being configured to
carry out instructions how to interact with the obtained document and with one or more different interfacing functions (50) based on the obtained question and under consideration of one or more effectiveness conditions (51);
call one or more different interfacing functions to gain context information (52) related to the question; and
generate an answer (31) to the question (30) based on the context information (52) gained from the called one or more different interfacing functions (50).

13. System according to claim 12,
wherein the question interface (3) is configured as user interface to obtain a question and/or output an answer in one or more of text form, as spoken language, as image data, and as time series data.

14. System according to claim 12 or 13,
wherein the system (1) is implemented in a user device, in particular a medical system or device, a patient monitor, a medical imaging device, or a clinical decision support system.

15. Computer program comprising program code means for causing a computer to carry out the steps of the method as claimed in any one of claims 1 to 11 when said computer program is carried out on the computer.
